# EUROPÄISCHE PATENTANMELDUNG

(11) **EP 3 501 709 A1**
(43) Veröffentlichungstag der Anmeldung: **26.06.2019**
(21) Anmeldenummer: 17209442.7
(22) Anmeldetag: 21.12.2017
(51) Int. Cl.: B23B 51/04, B28D 1/04

(54) **SCHNEIDABSCHNITT FÜR EINE BOHRKRONE**

(71) Anmelder: HILTI Aktiengesellschaft, 9494 Schaan (LI)
(72) Erfinder: Schroeder, Florian, 7304 Maienfeld (CH); Domani, Guenter, 88138 Weissensberg (DE); Rong, Pingyan, 6800 Feldkirch (AT)
(74) Vertreter: Hilti Aktiengesellschaft Corporate Intellectual Property

(57) **Zusammenfassung**

Schneidabschnitt (11), der über eine lösbare Verbindungseinrichtung mit einem Bohrschaftabschnitt verbindbar ist. Der Schneidabschnitt umfasst ein erstes geschlossenes Rohrelement (14), das in Form eines ersten Hohlzylinders ausgebildet ist, ein zweites geschlossenes Rohrelement (15), das in Form eines zweiten Hohlzylinders ausgebildet ist, und ein oder mehrere Bohrsegmente (16), die mit dem ersten geschlossenen Rohrelement (14) und/oder dem zweiten geschlossenen Rohrelement (15) verbunden sind.

## Beschreibung

### Technisches Gebiet

Die vorliegende Erfindung betrifft einen Schneidabschnitt für eine Bohrkrone gemäß dem Oberbegriff des Anspruchs 1.

### Stand der Technik

WO 2014/096359 A1 offenbart einen Schneidabschnitt für eine Bohrkrone, der mit einem Bohrschaftabschnitt der Bohrkrone über eine lösbare Verbindungseinrichtung verbindbar ist. Dabei ist die lösbare Verbindungseinrichtung als kombinierte Steck-Dreh-Verbindung ausgebildet. Als "Steck-Dreh-Verbindung" werden lösbare Verbindungen zwischen einem ersten und zweiten Verbindungselement bezeichnet, die in einer Richtung eine Steckverbindung bilden und zusätzlich über eine Drehverbindung verbunden werden. Der Schneidabschnitt umfasst eine oder mehrere Bohrsegmente, einen Ringabschnitt, ein äusseres Steckelement und eine ringförmige Anschlagschulter am Übergang vom Ringabschnitt zum äusseren Steckelement.

Schneidabschnitte, die mit einer kombinierten Steck-Dreh-Verbindung verbindbar sind, werden unter dem Produktnamen "Hilti DD X-CM" vertrieben. Die Schneidabschnitte "Hilti DD X-CM" umfassen mehrere Bohrsegmente, einen Ringabschnitt und ein äusseres Steckelement, wobei sich am Übergang vom Ringabschnitt zum äusseren Steckelement eine ringförmige Anschlagschulter für die Kraftübertragung befindet. Die Drehmomentübertragung erfolgt mithilfe von Stiftelementen, die mit schlitzförmigen Ausnehmungen im äusseren Steckelement zusammenwirken. Die Schneidabschnitte "Hilti DD X-CM" werden aus einem geschlossenen Rohrelement gefertigt. Dabei wird die ringförmige Anschlagschulter durch Drehbearbeitung erzeugt und die schlitzförmigen Ausnehmungen werden durch Fräsbearbeitung erzeugt.

Nachteilig am Aufbau der bekannten Schneidabschnitte "Hilti DD X-CM" sind der hohe Fertigungsaufwand durch die Drehbearbeitung der ringförmigen Anschlagschulter und die Fräsbearbeitung der schlitzförmigen Ausnehmungen. Ausserdem ist die Materialauswahl für den Ringabschnitt und das äussere Steckelement eingeschränkt. Da die Schneidabschnitte "Hilti DD X-CM" aus einem geschlossenen Rohrelement gefertigt werden, muss hinsichtlich der Anforderungen an den Schneidabschnitt bezüglich Kraftübertragung, Drehmomentübertragung und Zugbelastungen beim Entfernen einer verklemmten Bohrkrone ein Kompromiss bei der Materialauswahl getroffen werden.

### Darstellung der Erfindung

Die Aufgabe der vorliegenden Erfindung besteht darin, die Funktionalität eines Schneidabschnittes beim Bohren im Hinblick auf Kraftübertragung und Drehmomentübertragung sowie Zugbelastungen beim Entfernen einer verklemmten Bohrkrone zu verbessern. Ausserdem soll der Fertigungsaufwand bei der Herstellung eines Schneidabschnittes reduziert werden.

Diese Aufgabe wird bei derm eingangs genannten Schneidabschnitt für eine Bohrkrone erfindungsgemäß durch die Merkmale des unabhängigen Anspruchs 1 gelöst. Vorteilhafte Weiterbildungen sind in den abhängigen Ansprüchen angegeben.

Der Schneidabschnitt ist für eine Bohrkrone vorgesehen und ist über eine lösbare Verbindungseinrichtung mit einem Bohrschaftabschnitt der Bohrkrone verbindbar. Der Schneidabschnitt ist gekennzeichnet durch:
▪ ein erstes geschlossenes Rohrelement, das in Form eines ersten Hohlzylinders mit einer ersten äusseren Mantelfläche, einer ersten inneren Mantelfläche, einer ersten unteren Stirnfläche und einer ersten oberen Stirnfläche ausgebildet ist und das eine erste Hohlzylinderhöhe, einen ersten Innendurchmesser und einen ersten Aussendurchmesser aufweist,
▪ ein zweites geschlossenes Rohrelement, das in Form eines zweiten Hohlzylinders mit einer zweiten äusseren Mantelfläche, einer zweiten inneren Mantelfläche, einer zweiten unteren Stirnfläche und einer zweiten oberen Stirnfläche ausgebildet ist und das eine zweite Hohlzylinderhöhe, einen zweiten Innendurchmesser und einen zweiten Aussendurchmesser aufweist, wobei der erste Aussendurchmesser kleiner als der zweite Innendurchmesser ist, und
▪ ein oder mehrere Bohrsegmente,
wobei das erste geschlossene Rohrelement in das zweite geschlossene Rohrelement eingeschoben ist und das eine oder die mehreren Bohrsegmente mit dem ersten geschlossenen Rohrelement und/oder mit dem zweiten geschlossenen Rohrelement verbunden sind.

Der erfindungsgemäße Schneidabschnitt umfasst eine erstes geschlossenes Rohrelement, ein zweites geschlossenes Rohrelement und mindestens ein Bohrsegment. Das erste geschlossene Rohrelement ist in Form eines ersten Hohlzylinders ausgebildet und umfasst eine erste äussere Mantelfläche, eine erste innere Mantelfläche, eine erste untere Stirnfläche und eine erste obere Stirnfläche. Das zweite geschlossene Rohrelement ist in Form eines zweiten Hohlzylinders ausgebildet und umfasst eine zweite äussere Mantelfläche, eine zweite innere Mantelfläche, eine zweite untere Stirnfläche und eine zweite obere Stirnfläche. Um den Schneidabschnitt fertigzustellen, werden das erste geschlossene Rohrelement und das zweite geschlossene Rohrelement ineinander gesteckt und das eine oder die mehreren Bohrsegmente werden mit dem ersten geschlossenen Rohrelement und/oder mit dem zweiten geschlossenen Rohrelement verbunden. Die Bohrsegmente können mit dem ersten geschlossenen Rohrelement, mit dem zweiten geschlossenen Rohrelement und/oder mit dem ersten und zweiten geschlossenen Rohrelement verbunden sein. Im Hinblick auf die Stabilität des Schneidabschnittes ist es vorteilhaft, wenn die Bohrsegmente mit dem ersten und zweiten geschlossenen Rohrelement verbunden sind.

Bohrsegmente werden häufig durch Laserschweissen mit dem Ringabschnitt des Schneidabschnittes verbunden; aber nicht alle Materialkombinationen sind gut schweissbar. Dadurch, dass die Bohrsegmente mit dem ersten geschlossenen Rohrelement oder dem zweiten geschlossenen Rohrelement verbunden sein können, können auch nicht schweissbare Materialien verwendet werden. Beim Laserschweissen der Bohrsegmente muss in der Regel eine ausreichende Anbindungsfläche vorhanden sein.

Der Schneidabschnitt ist so aufgebaut, dass die Kraftübertragung auf den Schneidabschnitt über das erste geschlossene Rohrelement und die Drehmomentübertragung auf den Schneidabschnitt über das zweite geschlossene Rohrelement erfolgt. Die erste obere Stirnfläche des ersten geschlossenen Rohrelementes bildet eine ringförmige Anschlagschulter, die zur Kraftübertragung verwendet wird. Ein Bohrschaftabschnitt überträgt die Kraft mittels einer ringförmigen Stirnfläche auf die ringförmige Anschlagschulter. Die Drehmomentübertragung erfolgt beispielsweise über Stiftelemente des Bohrschaftabschnittes, die mit schlitzförmigen Ausnehmungen im zweiten geschlossenen Rohrelement zusammenwirken. Durch die Trennung des Schneidabschnittes in das erste geschlossene Rohrelement und das zweite geschlossene Rohrelement können die unterschiedlichen Anforderungen an den Schneidabschnitt im Hinblick auf die Kraftübertragung und Drehmomentübertragung berücksichtigt werden.

Durch die Trennung des Schneidabschnittes in das erste geschlossene Rohrelement und das zweite geschlossene Rohrelement kann ausserdem der Fertigungsaufwand für die Herstellung des Schneidabschnittes reduziert werden. Die erste obere Stirnfläche bildet die ringförmige Anschlagschulter für die Kraftübertragung, so dass eine Drehbearbeitung entfällt. Das erste und zweite geschlossene Rohrelement sind als Hohlzylinder mit kreisringförmigen Querschnitten ausgebildet und weisen eine konstante Materialstärke auf. Das erste geschlossene Rohrelement kann aus einem ersten ebenen Blechteil hergestellt werden, das zu einem ersten offenen Rohrelement umgeformt wird und an ersten Stosskanten stoffschlüssig oder formschlüssig verbunden wird. Das zweite geschlossene Rohrelement kann aus einem zweiten ebenen Blechteil hergestellt werden, das zu einem zweiten offenen Rohrelement umgeformt wird und an zweiten Stosskanten stoffschlüssig oder formschlüssig verbunden wird.

Bevorzugt sind die erste untere Stirnfläche des ersten geschlossenen Rohrelementes und die zweite untere Stirnfläche des zweiten geschlossenen Rohrelementes bündig ausgerichtet. Die bündige Ausrichtung der ersten unteren Stirnfläche und der zweiten unteren Stirnfläche hat den Vorteil, dass eine breite Anbindungsfläche für die Bohrsegmente entsteht, an der die Bohrsegmente mit dem ersten geschlossenen Rohrelement und dem zweiten geschlossenen Rohrelement verbunden werden können.

Besonders bevorzugt sind das eine oder die mehreren Bohrsegmente mit der ersten unteren Stirnfläche und der zweiten unteren Stirnfläche verbunden. Durch die bündige Ausrichtung der ersten unteren Stirnfläche und der zweiten unteren Stirnfläche entsteht eine breite Anbindungsfläche für die Bohrsegmente. Wenn die Bohrsegmente mit der ersten unteren Stirnfläche und der zweiten unteren Stirnfläche verbunden werden, können das erste geschlossene Rohrelement und das zweite geschlossene Rohrelement gleichzeitig miteinander verbunden werden. Wenn die Bohrsegmente gleichzeitig mit dem ersten und zweiten geschlossenen Rohrelement verbunden werden, kann der Fertigungsaufwand reduziert werden. Abhängig von den verwendeten Materialstärken kann es erforderlich sein, dass das erste geschlossene Rohrelement und das zweite geschlossene Rohrelement zusätzlich miteinander verbunden werden. Sollten höhere Widerstandsmomente erforderlich sein, können das erste geschlossene Rohrelement und das zweite geschlossene Rohrelement zusätzlich miteinander verbunden werden.

Bevorzugt weist das zweite geschlossene Rohrelement mindestens eine schlitzförmige Ausnehmung auf, wobei die mindestens eine schlitzförmige Ausnehmung einen Querschlitz und einen Verbindungsschlitz umfasst und der Verbindungsschlitz den Querschlitz mit der zweiten oberen Stirnfläche des zweiten geschlossenen Rohrelementes verbindet. Die mindestens eine schlitzförmige Ausnehmung ist Teil der lösbaren Verbindungseinrichtung, die den Schneidabschnitt mit einem Bohrschaftabschnitt der Bohrkrone verbindet. Die schlitzförmige Ausnehmung ist in T-Form oder L-Form ausgebildet und ermöglicht im verbundenen Zustand der Bohrkrone eine Relativbewegung zwischen dem Schneidabschnitt und dem Bohrschaftabschnitt. Durch die Relativbewegung zwischen dem Schneidabschnitt und dem Bohrschaftabschnitt kann ein verklemmter Schneidabschnitt aus dem Untergrund gelöst werden.

Besonders bevorzugt weist das zweite geschlossene Rohrelement in der zweiten inneren Mantelfläche mindestens eine Quernut auf, die auf Höhe des Verbindungsschlitzes der mindestens einen schlitzförmigen Ausnehmung angeordnet ist. Die mindestens eine Quernut ist Teil der lösbaren Verbindungseinrichtung, die den Schneidabschnitt mit einem Bohrschaftabschnitt der Bohrkrone verbindet. Die Breite der Quernut ist grösser oder gleich der Breite des Querschlitzes der mindestens einen schlitzförmigen Ausnehmung. In die Quernut des Schneidabschnittes greift eine passende Quernase eines Bohrschaftabschnittes ein. Die Quernut und Quernase bilden eine zusätzliche formschlüssige Verbindung, die verhindert, dass die Steck-Dreh-Verbindung beim Lösen einer verklemmten Bohrkrone unbeabsichtigt geöffnet wird und der Bohrschaftabschnitt ohne Schneidabschnitt aus dem Untergrund entfernt wird.

Bevorzugt weist das erste geschlossene Rohrelement in der ersten inneren Mantelfläche mindestens eine Innenvertiefung auf, die sich über die erste Hohlzylinderhöhe erstreckt. Die mindestens eine Innenvertiefung in der ersten inneren Mantelfläche kann einen Transportkanal für eine Kühl- und Spülflüssigkeit bilden und ermöglicht die Ausbildung von Schneidabschnitten mit geringen Innenüberständen der Bohrsegmente auf der Innenseite des Schneidabschnittes. Die Breite, Tiefe, Form und/oder Anzahl der mindestens einen Innenvertiefung werden an die benötigte Flüssigkeitsmenge der Kühl- und Spülflüssigkeit angepasst.

In einer bevorzugten Weiterentwicklung ist das erste geschlossene Rohrelement aus einem ersten Material und das zweite geschlossene Rohrelement aus einem zweiten Material ausgebildet. Der erfindungsgemäße Schneidabschnitt ist so aufgebaut, dass die Kraftübertragung auf den Schneidabschnitt über das erste geschlossene Rohrelement und die Drehmomentübertragung auf den Schneidabschnitt über das zweite geschlossene Rohrelement erfolgt. Durch die Trennung des Schneidabschnittes in das erste geschlossene Rohrelement und das zweite geschlossene Rohrelement kann die Auswahl des ersten Materials für das erste geschlossene Rohrelement und des zweiten Materials für das zweite geschlossene Rohrelement an die unterschiedlichen Anforderungen an den Schneidabschnitt im Hinblick auf die Kraftübertragung und Drehmomentübertragung angepasst werden. Ausserdem kann das zweite Material im Hinblick auf Zugbelastungen beim Entfernen einer verklemmten Bohrkrone angepasst werden.

Bevorzugt ist das erste geschlossene Rohrelement als erstes umgeformtes Blechteil ausgebildet. Die Verwendung eines ersten umgeformten Blechteils ermöglicht die Herstellung des ersten geschlossenen Rohrelementes aus ebenen Blechteilen. Das erste geschlossene Rohrelement kann aus einem ersten Blechteil hergestellt werden, das zu einem ersten offenen Rohrelement umgeformt wird und an den ersten Stosskanten verbunden wird. Als Umformverfahren für das erste Blechteil eignen sich Kaltumformverfahren und Warmumformverfahren. Die Verbindung der ersten Stosskanten kann stoffschlüssig oder formschlüssig erfolgen, wobei die Stosskanten von Rohrelementen üblicherweise stoffschlüssig durch Schweissen verbunden werden. Neben der stoffschlüssigen Verbindung können die ersten Stosskanten formschlüssig verbunden werden.

Besonders bevorzugt weist das erste umgeformte Blechteil an gegenüberliegenden Seiten mindestens ein erstes positives Formschlusselement und mindestens ein entsprechendes erstes negatives Formschlusselement auf, wobei das mindestens eine erste positive Formschlusselement und das mindestens eine erste negative Formschlusselement beim ersten geschlossenen Rohrelement formschlüssig verbunden sind. Die Verbindung der ersten Stosskanten über erste Formschlusselemente hat den Vorteil, dass kein Wärmeeintrag in das erste offene Rohrelement erfolgt, der zu Spannungen im ersten geschlossenen Rohrelement führen kann.

Bevorzugt ist das zweite geschlossene Rohrelement als zweites umgeformtes Blechteil ausgebildet ist. Die Verwendung eines zweiten umgeformten Blechteils ermöglicht die Herstellung des zweiten geschlossenen Rohrelementes aus ebenen Blechteilen. Das zweite geschlossene Rohrelement kann aus einem zweiten Blechteil hergestellt werden, das zu einem zweiten offenen Rohrelement umgeformt wird und an den zweiten Stosskanten verbunden wird. Die mindestens eine schlitzförmige Ausnehmung kann im zweiten Blechteil beispielsweise durch Stanzen oder Ausschneiden erzeugt werden. Als Umformverfahren für das zweite Blechteil eignen sich Kaltumformverfahren und Warmumformverfahren. Die Verbindung der zweiten Stosskanten kann stoffschlüssig oder formschlüssig erfolgen, wobei die Stosskanten von Rohrelementen üblicherweise stoffschlüssig durch Schweissen verbunden werden. Neben der stoffschlüssigen Verbindung können die zweiten Stosskanten formschlüssig verbunden werden.

Besonders bevorzugt weist das zweite umgeformte Blechteil an gegenüberliegenden Seiten mindestens ein zweites positives Formschlusselement und mindestens ein entsprechendes zweites negatives Formschlusselement auf, wobei das mindestens eine zweite positive Formschlusselement und das mindestens eine zweite negative Formschlusselement beim zweiten geschlossenen Rohrelement formschlüssig verbunden sind. Die Verbindung der zweiten Stosskanten über zweite Formschlusselemente hat den Vorteil, dass kein Wärmeeintrag in das zweite offene Rohrelement erfolgt, der zu Spannungen im zweiten geschlossenen Rohrelement führen kann.

Der erfindungsgemäße Schneidabschnitt für eine Bohrkrone ist für eine Verbindung mit einem Bohrschaftabschnitt der Bohrkrone vorgesehen. Die Erfindung betrifft weiterhin eine Bohrkrone mit einem Schneidabschnitt und einem Bohrschaftabschnitt, wobei der Schneidabschnitt und der Bohrschaftabschnitt über eine lösbare Verbindungseinrichtung verbindbar sind.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine Bohrkrone mit einem erfindungsgemäßen Schneidabschnitt und einem Bohrschaftabschnitt, die über eine lösbare Verbindungseinrichtung verbindbar sind, in einem unverbundenen Zustand der Bohrkrone (FIG. 1A) und in einem verbundenen Zustand der Bohrkrone (FIG. 1B); und
- FIGN. 2A-C: den erfindungsgemäßen Schneidabschnitt der FIG. 1 bestehend aus einem ersten geschlossenen Rohrelement, einem zweiten geschlossenen Rohrelement und mehreren Bohrsegmenten in einem Längsschnitt entlang der Schnittlinie A-A in FIG. 1A.

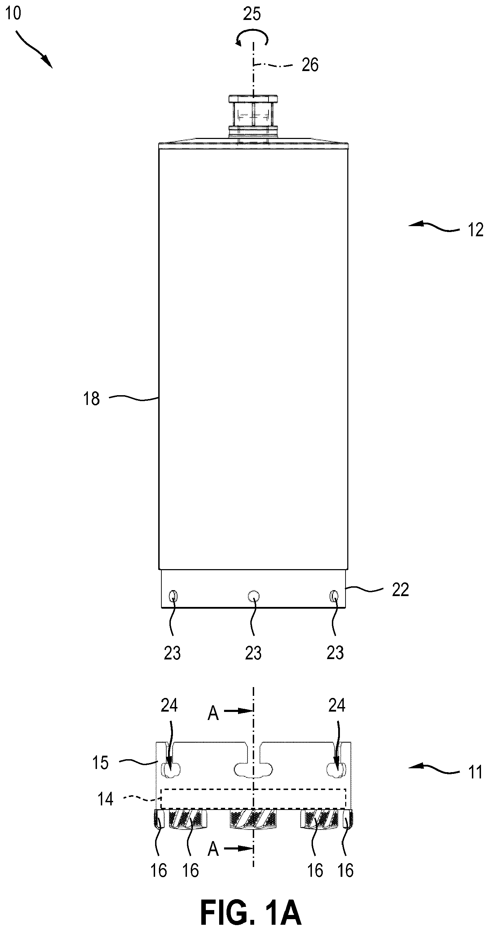

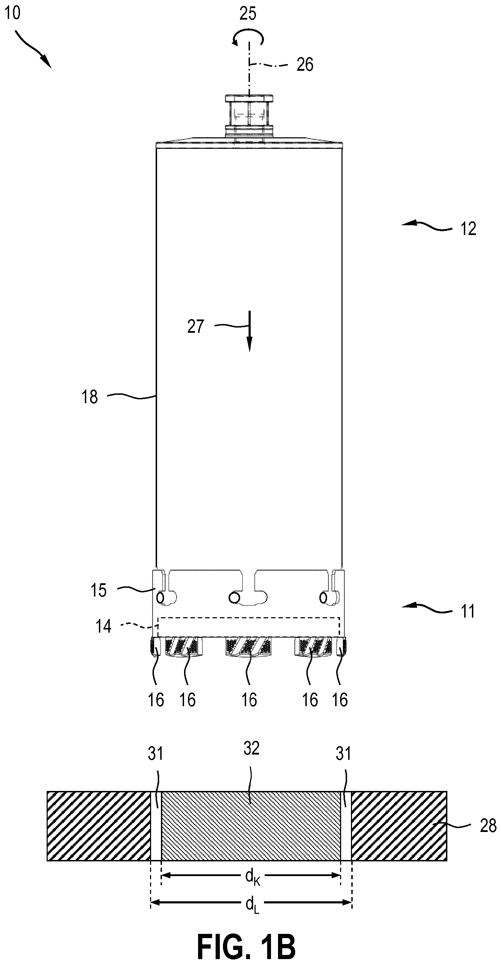

**FIGN. 1A****, B** zeigen eine Bohrkrone **10,** die einen erfindungsgemäßen Schneidabschnitt **11** und einen Bohrschaftabschnitt **12** umfasst, wobei der Schneidabschnitt 11 und der Bohrschaftabschnitt 12 über eine lösbare Verbindungseinrichtung **13** verbindbar sind. Dabei zeigt FIG. 1A den Schneidabschnitt 11 und Bohrschaftabschnitt 12 in einem unverbundenen Zustand der Bohrkrone und FIG. 1B zeigt den Schneidabschnitt 11 und Bohrschaftabschnitt 12 in einem verbundenen Zustand der Bohrkrone.

Der Schneidabschnitt 11 umfasst ein erstes geschlossenes Rohrelement **14,** ein zweites geschlossenes Rohrelement **15** und mehrere Bohrsegmente **16,** die mit dem ersten geschlossenen Rohrelement 14 und dem zweiten geschlossenen Rohrelement 15 verbunden sind. Im Ausführungsbeispiel sind die Bohrsegmente 16 mit dem ersten geschlossenen Rohrelement 14 und dem zweiten geschlossenen Rohrelement 15 verbunden, wobei das erste und zweite Rohrelement 14, 15 im Bereich der Verbindung ebenfalls miteinander verbunden sind. Alternativ können die Bohrsegmente 16 mit dem ersten geschlossenen Rohrelement 14 oder dem zweiten geschlossenen Rohrelement 15 verbunden sein. Bei Bedarf können das erste und zweite geschlossene Rohrelement 14, 15 noch zusätzlich miteinander verbunden sein.

Die Bohrsegmente 16 sind ringförmig angeordnet und bilden einen Bohrring mit Zwischenräumen. Der Schneidabschnitt 11 kann anstatt mehrerer Bohrsegmente 16 auch ein einzelnes als geschlossener Bohrring ausgebildetes Bohrsegment aufweisen. Die Bohrsegmente 16 können mit dem ersten geschlossenen Rohrelement 14 und dem zweiten geschlossenen Rohrelement 15 verschweißt, verlötet, verschraubt oder in einer anderen geeigneten Befestigungsart am ersten und/oder zweiten geschlossenen Rohrelement 14, 15 befestigt sein. Der Bohrschaftabschnitt 12 umfasst einen rohrförmigen Bohrschaft 17, einen Deckel **18** und ein Einsteckende **19,** über das die Bohrkrone 10 in einer Werkzeugaufnahme eines Kernbohrgerätes befestigt wird.

Die lösbare Verbindungseinrichtung 13 ist in Form einer kombinierten Steck-Dreh-Verbindung ausgebildet, wie sie in WO 2014/096359 A1 offenbart ist. Die lösbare Verbindungseinrichtung 13 umfasst ein erstes Steckelement **21,** das in den Schneidabschnitt 11 integriert ist, und ein zweites Steckelement **22,** das in den Bohrschaftabschnitt 12 integriert ist. Das erste und zweite Steckelement 21, 22 bilden eine Steckverbindung und werden zusätzlich über eine Drehverbindung gesichert. Die Drehverbindung umfasst mehrere Stiftelemente **23,** die in schlitzförmige Ausnehmungen **24** eingeführt werden. Die Stiftelemente 23 sind an einer Außenseite des zweiten Steckelementes 22 befestigt und die schlitzförmigen Ausnehmungen 24 sind im ersten Steckelement 21 vorgesehen. Der Schneidabschnitt 11 lässt sich vom Bediener einfach und schnell mit dem Bohrschaftabschnitt 12 verbinden. Dazu wird der Schneidabschnitt 11 mit dem ersten Steckelement 21 so auf das zweite Steckelement 22 des Bohrschaftabschnittes 12 gesteckt, dass die Stiftelemente 23 in den schlitzförmigen Ausnehmungen 24 angeordnet sind.

Im Bohrbetrieb wird die Bohrkrone 10 von einem Kernbohrgerät in einer Drehrichtung **25** um eine Drehachse **26** angetrieben, wobei die Drehachse 26 mit einer Längsachse des rohrförmigen Bohrschaftes 17 zusammenfällt. Während der Drehung der Bohrkrone 10 um die Drehachse 26 wird die Bohrkrone 10 entlang einer Vorschubrichtung **27** in ein Werkstück **28** bewegt, wobei die Vorschubrichtung 27 parallel zur Drehachse 26 verläuft. Die Bohrkrone 10 erzeugt im Werkstück 28 ein Bohrloch **31** mit einem Bohrlochdurchmesser **d_{L}** und einen Bohrkern **32** mit einem Kerndurchmesser **d_{K}.** Die Bohrsegmente 15 bilden einen Bohrring mit einem Außendurchmesser, der dem Bohrlochdurchmesser d_{L} entspricht, und einem Innendurchmesser, der dem Kerndurchmesser d_{K} entspricht.

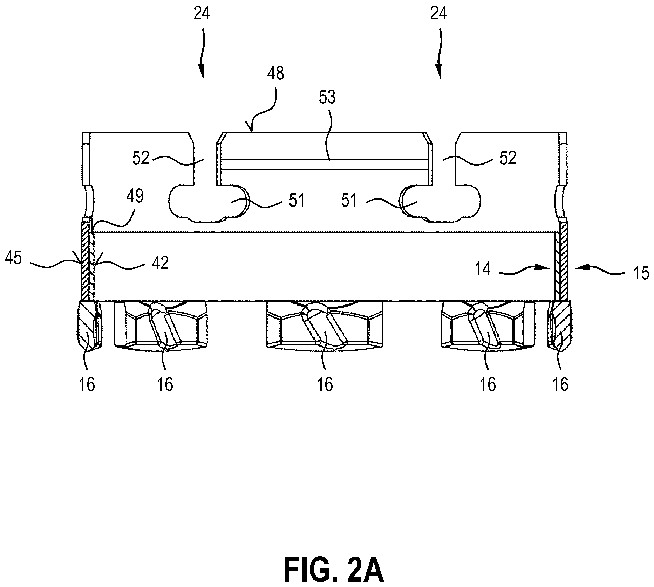

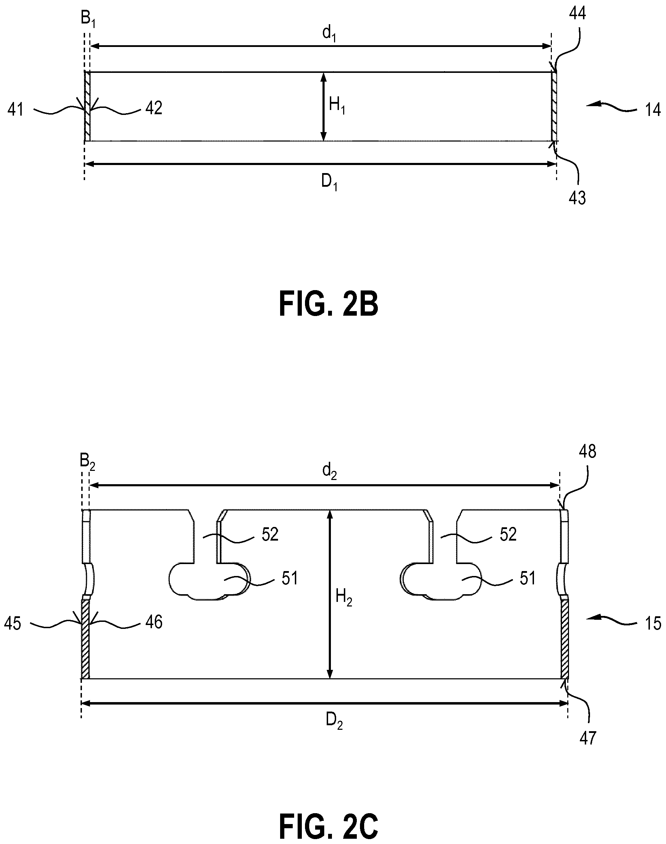

**FIGN. 2A-C** zeigen den erfindungsgemäßen Schneidabschnitt 11 der FIG. 1 mit dem ersten geschlossenen Rohrelement 14, dem zweiten geschlossenen Rohrelement 15 und den Bohrsegmenten 16 in einem Längsschnitt entlang der Schnittlinie A-A in FIG. 1A. FIG. 2B zeigt das erste geschlossene Rohrelement 14 und FIG. 2C das zweite geschlossene Rohrelement 15 des Schneidabschnittes 11.

Der Schneidabschnitt 11 wird aus dem ersten geschlossenen Rohrelement 14, dem zweiten geschlossenen Rohrelement 15 und den Bohrsegmenten 16 hergestellt. Die Bohrsegmente 16 werden mit dem ersten geschlossenen Rohrelement 14 und/oder dem zweiten geschlossenen Rohrelement 15 verbunden. Dabei können die Bohrsegmente 16 mit dem ersten und/oder zweiten geschlossenen Rohrelement 14, 15 verschweißt, verlötet, verschraubt oder in einer anderen geeigneten Befestigungsart befestigt werden.

Das erste geschlossene Rohrelement 14 ist in Form eines ersten Hohlzylinders mit einer kreisringförmigen Querschnittsfläche ausgebildet. Das erste geschlossene Rohrelement 14 umfasst eine erste äussere Mantelfläche **41,** eine erste innere Mantelfläche **42,** eine erste untere Stirnfläche **43** und eine erste obere Stirnfläche **44.** Die Abmessungen des ersten geschlossenen Rohrelementes sind durch eine erste Hohlzylinderhöhe **H₁,** einen ersten Innendurchmesser **d₁** und einen ersten Aussendurchmesser **D₁** definiert. Die Breite des ersten geschlossenen Rohrelementes 14 ergibt sich als halbe Differenz des ersten Aussendurchmessers D₁ und des ersten Innendurchmessers d₁ und wird als erste Breite **B₁** bezeichnet.

Das zweite geschlossene Rohrelement 15 in Form eines zweiten Hohlzylinders mit einer kreisringförmigen Querschnittsfläche ausgebildet. Das zweite geschlossene Rohrelement 15 umfasst eine zweite äussere Mantelfläche **45,** eine zweite innere Mantelfläche **46,** eine zweite untere Stirnfläche **47** und eine zweite obere Stirnfläche **48.** Die Abmessungen des zweiten geschlossenen Rohrelementes 15 sind durch eine zweite Hohlzylinderhöhe **H₂,** einen zweiten Innendurchmesser **d₂** und einen zweiten Aussendurchmesser **D₂** definiert. Die Breite des zweiten geschlossenen Rohrelementes 15 ergibt sich als halbe Differenz des zweiten Aussendurchmessers D₂ und des zweiten Innendurchmessers d₂ und wird als zweite Breite **B₂** bezeichnet.

Die erste untere Stirnfläche 43 des ersten geschlossenen Rohrelementes 14 und die zweite untere Stirnfläche 47 des zweiten geschlossenen Rohrelementes 15 sind bündig ausgerichtet. Die bündige Ausrichtung der ersten unteren Stirnfläche 43 und der zweiten unteren Stirnfläche 47 hat den Vorteil, dass eine breite Anbindungsfläche für die Bohrsegmente 16 entsteht, an der die Bohrsegmente 16 mit dem ersten geschlossenen Rohrelement 14 und dem zweiten geschlossenen Rohrelement 15 verbunden werden können. Wenn die Bohrsegmente 16 mit der ersten unteren Stirnfläche 43 und der zweiten unteren Stirnfläche 47 verbunden werden, können das erste geschlossene Rohrelement 14 und das zweite geschlossene Rohrelement 15 gleichzeitig miteinander verbunden werden. Abhängig von den verwendeten Materialstärken kann es erforderlich sein, dass das erste geschlossene Rohrelement 14 und das zweite geschlossene Rohrelement 15 zusätzlich miteinander verbunden werden.

Der Schneidabschnitt 11 ist so aufgebaut, dass die Kraftübertragung vom Bohrschaftabschnitt 12 auf den Schneidabschnitt 11 über das erste geschlossene Rohrelement 14 erfolgt und die Drehmomentübertragung vom Bohrschaftabschnitt 12 auf den Schneidabschnitt 11 über das zweite geschlossene Rohrelement 15 erfolgt. Die erste obere Stirnfläche 44 des ersten geschlossenen Rohrelementes 14 bildet an der Innenseite des Schneidabschnittes 11 eine ringförmige Anschlagschulter **49** für die Kraftübertragung von einem verbundenen Bohrschaftabschnitt. Die Drehmomentübertragung vom Bohrschaftabschnitt 12 auf den Schneidabschnitt 11 erfolgt über die Stiftelemente 23 und die schlitzförmigen Ausnehmungen 24. Das zweite geschlossene Rohrelement 15 des Schneidabschnittes 11 weist an der zweiten oberen Stirnfläche 48 mehrere schlitzförmige Ausnehmungen 24 auf. Die schlitzförmigen Ausnehmungen 24 umfassen jeweils einen Querschlitz **51** und einen Verbindungsschlitz **52,** wobei der Verbindungsschlitz 52 den Querschlitz 51 mit der zweiten oberen Stirnfläche 48 verbindet.

Das erste geschlossene Rohrelement 14 kann aus einem ersten Material und das zweite geschlossene Rohrelement 15 aus einem zweiten Material hergestellt werden. Durch die Trennung des Schneidabschnittes 11 in das erste geschlossene Rohrelement 14 und das zweite geschlossene Rohrelement 15 kann die Auswahl des ersten Materials und des zweiten Materials an die unterschiedlichen Anforderungen des ersten geschlossenen Rohrelementes 14 und des zweiten geschlossenen Rohrelementes 15 angepasst werden.

## Patentansprüche

1. Schneidabschnitt (11) für eine Bohrkrone (10), wobei der Schneidabschnitt (11) mit einem Bohrschaftabschnitt (12) der Bohrkrone (10) über eine lösbare Verbindungseinrichtung (13) verbindbar ist, **gekennzeichnet durch**:
▪ ein erstes geschlossenes Rohrelement (14), das in Form eines ersten Hohlzylinders mit einer ersten äusseren Mantelfläche (41), einer ersten inneren Mantelfläche (42), einer ersten unteren Stirnfläche (43) und einer ersten oberen Stirnfläche (44) ausgebildet ist und das eine erste Hohlzylinderhöhe (H₁), einen ersten Innendurchmesser (d₁) und einen ersten Aussendurchmesser (D₁) aufweist,
▪ ein zweites geschlossenes Rohrelement (15), das in Form eines zweiten Hohlzylinders mit einer zweiten äusseren Mantelfläche (45), einer zweiten inneren Mantelfläche (46), einer zweiten unteren Stirnfläche (47) und einer zweiten oberen Stirnfläche (48) ausgebildet ist und das eine zweite Hohlzylinderhöhe (H2), einen zweiten Innendurchmesser (d₂) und einen zweiten Aussendurchmesser (D2) aufweist, wobei der erste Aussendurchmesser (D₁) kleiner als der zweite Innendurchmesser (d₂) ist, und
▪ ein oder mehrere Bohrsegmente (16),
wobei das erste geschlossene Rohrelement (14) in das zweite geschlossene Rohrelement (15) eingeschoben ist und das eine oder die mehreren Bohrsegmente (16) mit dem ersten geschlossenen Rohrelement (14) und/oder dem zweiten geschlossenen Rohrelement (15) verbunden sind.

2. Schneidabschnitt nach Anspruch 1, **dadurch gekennzeichnet, dass** die erste untere Stirnfläche (43) und die zweite untere Stirnfläche (47) bündig ausgerichtet sind.

3. Schneidabschnitt nach Anspruch 2, **dadurch gekennzeichnet, dass** das eine oder die mehreren Bohrsegmente (16) mit der ersten unteren Stirnfläche (43) und der zweiten unteren Stirnfläche (47) verbunden sind.

4. Schneidabschnitt nach Anspruch 1, **dadurch gekennzeichnet, dass** das zweite geschlossene Rohrelement (15) mindestens eine schlitzförmige Ausnehmung (24) aufweist, wobei die mindestens eine schlitzförmige Ausnehmung (24) einen Querschlitz (51) und einen Verbindungsschlitz (52) umfasst und der Verbindungsschlitz (52) den Querschlitz (51) mit der zweiten oberen Stirnfläche (48) des zweiten geschlossenen Rohrelementes (15) verbindet.

5. Schneidabschnitt nach Anspruch 4, **dadurch gekennzeichnet, dass** das zweite geschlossene Rohrelement (15) in der zweiten inneren Mantelfläche (46) mindestens eine Quernut (53) aufweist, die auf Höhe des Verbindungsschlitzes (52) der mindestens einen schlitzförmigen Ausnehmung (24) angeordnet ist.

6. Schneidabschnitt nach Anspruch 1, **dadurch gekennzeichnet, dass** das erste geschlossene Rohrelement (14) in der ersten inneren Mantelfläche (42) mindestens eine Innenvertiefung aufweist, die sich über die erste Hohlzylinderhöhe (Hi) erstreckt.

7. Schneidabschnitt nach einem der Ansprüche 1 bis 6, **dadurch gekennzeichnet, dass** das erste geschlossene Rohrelement (14) aus einem ersten Material und das zweite geschlossene Rohrelement (15) aus einem zweiten Material ausgebildet ist.

8. Schneidabschnitt nach einem der Ansprüche 1 bis 7, **dadurch gekennzeichnet, dass** das erste geschlossene Rohrelement (14) als erstes umgeformtes Blechteil ausgebildet ist.

9. Schneidabschnitt nach Anspruch 8, **dadurch gekennzeichnet, dass** das erste umgeformte Blechteil an gegenüberliegenden Seiten mindestens ein erstes positives Formschlusselement und mindestens ein entsprechendes erstes negatives Formschlusselement aufweist, wobei das mindestens eine erste positive Formschlusselement und das mindestens eine erste negative Formschlusselement beim ersten geschlossenen Rohrelement formschlüssig verbunden sind.

10. Schneidabschnitt nach einem der Ansprüche 1 bis 7, **dadurch gekennzeichnet, dass** das zweite geschlossene Rohrelement (15) als zweites umgeformtes Blechteil ausgebildet ist.

11. Schneidabschnitt nach Anspruch 10, **dadurch gekennzeichnet, dass** das zweite umgeformte Blechteil an gegenüberliegenden Seiten mindestens ein zweites positives Formschlusselement und mindestens ein entsprechendes zweites negatives Formschlusselement aufweist, wobei das mindestens eine zweite positive Formschlusselement und das mindestens eine zweite negative Formschlusselement beim zweiten geschlossenen Rohrelement formschlüssig verbunden sind.

12. Bohrkrone (10) mit einem Schneidabschnitt (11) nach einem der Ansprüche 1 bis 11 und einem Bohrschaftabschnitt (12), wobei der Schneidabschnitt (11) und der Bohrschaftabschnitt (12) über eine lösbare Verbindungseinrichtung (13) verbindbar sind.
